# FASCICULE DE BREVET EUROPEEN

(11) **EP 1 032 526 B1**
(45) Date de publication et mention de la délivrance du brevet: **13.08.2003**
(21) Numéro de dépôt: 99946252.6
(22) Date de dépôt: 28.09.1999
(51) Int. Cl.: B62D 25/08, B62D 29/00

(54) **FACADE AVANT COMPOSITE METAL/PLASTIQUE RENFORCEE SURMOULEE POUR VEHICULE AUTOMOBILE**
VORDERFRONT AUS VERSTÄRKTER UMGOSSENER METALL- UND KUNSTSTOFFVERBUNDWERKSTOFF FUR KRAFTFAHRZEUGE
OVERMOULDED REINFORCED METAL/PLASTIC COMPOSITE FRONT PANEL FOR MOTOR VEHICLE

(30) Priorité: 30.09.1998 FR 9812232
(43) Date de publication de la demande: 06.09.2000
(73) Titulaire: VALEO THERMIQUE MOTEUR, 78321 La Verrière (FR); VALEO VISION, 93000 Bobigny (FR)
(72) Inventeur: CANTINEAU, Eric, F-75017 Paris (FR); SIGONNEAU, Jacques, F-28170 Theuvy Achères (FR); GUYOMARD, Jean-Nicolas, F-27930 Le Mesnil Fuguet (FR)
(86) Numéro de dépôt international: FR9902304
(87) Numéro de publication internationale: WO00018635

(56) Documents cités:
- EP-A- 0 370 342
- EP-A- 0 658 470
- FR-A- 2 761 331
- US-A- 5 658 041

## Description

La présente invention concerne une façade avant composite métal/plastique pour véhicule automobile.

Une telle façade est un élément de structure du véhicule susceptible d'intégrer divers équipements du véhicule tels que projecteurs, clignotants, avertisseur sonore, échangeur thermique, groupe moto-ventilateur ou module de refroidissement complet, etc.

La façade avant, ainsi pourvue de ces équipements, constitue un module unitaire préparé et livré par l'équipementier, prêt à être monté sur le véhicule par le constructeur.

Le montage de ce module se fait par raccordement à des éléments de structure latéraux du véhicule tels que longerons, ailes ou coque, puis mise en place d'un pare-chocs ou bouclier frontal rapporté sur le module.

Une structure de façade entièrement en matière plastique ne permettant pas de répondre aux exigences de sécurité des essais de collision ("crash tests"), il est nécessaire d'associer pour la structure de la façade avant des éléments en matière plastique (pour la légèreté et le faible coût de revient) et des éléments métalliques (pour la tenue mécanique). La technique actuellement employée consiste à réaliser un profilé à partir d'une tôle emboutie et à rapporter celui-ci sur un support plastique par vissage ou rivetage de douilles de fixation.

Outre ce profilé, la façade comprend un jambage central métallique comportant un système de fixation à la serrure du capot du véhicule. Le document EP-A- 0658 470 décrit, par ailleurs, une façade selon le préambule de la revendication 1. Toutefois, le jambage n'assure pas, capot fermé, la liaison mécanique entre capot et bouclier pour contribuer à la rigidification d'ensemble de la structure du véhicule.

Habituellement, le montage de ce jambage se fait en vissant ensemble la serrure de capot et le jambage, avec interposition d'une partie de la façade, de manière à solidariser ensemble ces trois éléments.

Cependant, dans cette configuration, la liaison entre la façade et le jambage reste démontable, de sorte qu'un utilisateur du véhicule peut, par exemple après un réglage de la serrure, oublier de remonter tous les points de fixation de cette dernière, réduisant ainsi la résistance du véhicule en cas d'accident.

L'un des buts de la présente invention est de pallier cet inconvénient, en proposant une structure de façade avant intégrant le jambage central qui garantisse la tenue mécanique d'ensemble et supprime les assemblages démontables.

Pour cela, l'invention présente les caractéristiques définies à la revendication 1.

L'élément en matière plastique comporte avantageusement des nervures verticales de renforcement du profilé.
Le profilé et le jambage peuvent être solidarisés avant surmoulage de l'élément en matière plastique, notamment par clinchage, soudage ou rivetage, ou encore pendant le surmoulage, notamment par clinchage.

D'autres caractéristiques et avantages de l'invention ressortiront de la description détaillée d'un exemple de réalisation ci-dessous, faite en référence aux dessins annexés.

La figure 1 représente en perspective frontale la partie métallique de la façade avant selon l'invention, avant surmoulage de la matière plastique.

La figure 2 représente, également en perspective frontale, la façade terminée, après surmoulage de la matière plastique.

La figure 3 représente en perspective arrière l'une des extrémités latérales de la façade de la figure 2, illustrant en particulier l'interpénétration entre l'élément métallique et la matière plastique.

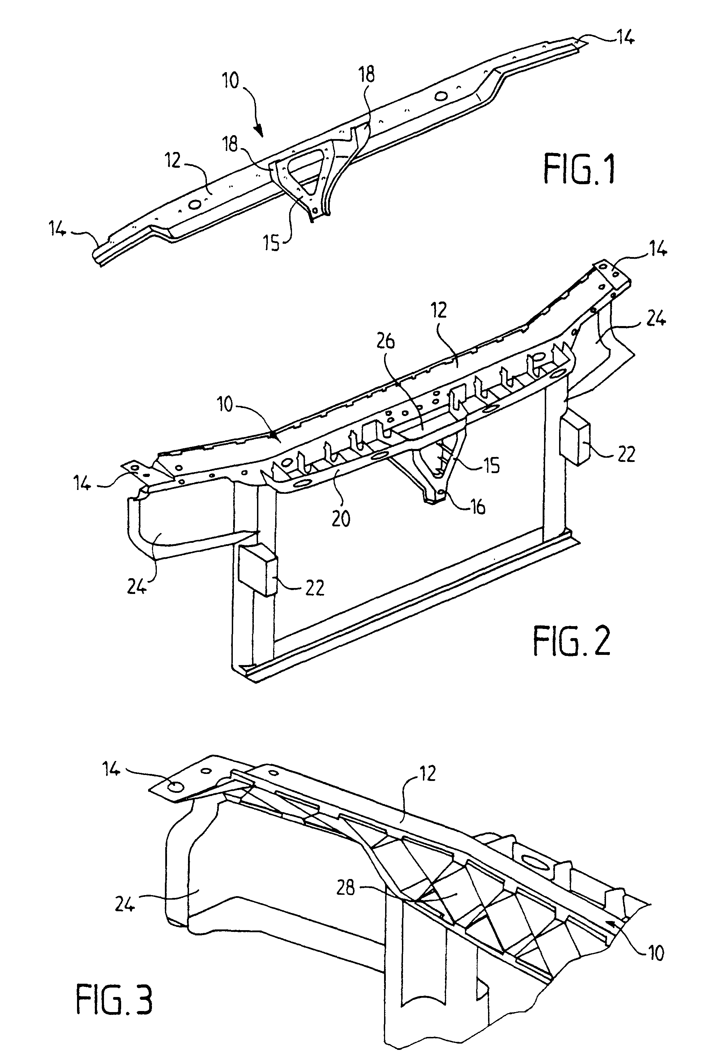

La figure 1 montre l'élément métallique 10 d'une façade composite métal/plastique selon l'invention. L'élément métallique comporte un profilé transversal 12 pourvu à ses extrémités de trous 14 de fixation à des longerons ou à des ailes du véhicule, de manière à garantir la rigidité mécanique du châssis de ce dernier. Ce profilé peut être par exemple réalisé par découpe et emboutissage d'une tôle à la forme voulue.

L'élément 10 comprend également un jambage central 15 comportant à son extrémité libre inférieure un trou 16 de fixation à la poutre du bouclier ou du pare-chocs du véhicule. A son autre extrémité, le jambage 15 est solidarisé de manière non démontable en 18 au profilé 12. Cette solidarisation peut être réalisée par diverses techniques connues, par exemple par soudage, rivetage ou clinchage (déformation plastique de l'une des pièces de manière à remplir par repoussage une découpe homologue en forme de queue d'aronde de l'autre pièce).

La pièce métallique 10 ainsi réalisée est ensuite surmoulée par une matière plastique, pour obtenir le support de face avant illustré figure 2 et 3.

Pour ce surmoulage, on peut par exemple utiliser la technique de réalisation d'un élément composite métal/plastique exposée dans le EP-A-0 370 342 : on pourra se référer à ce document pour de plus amples détails sur la mise en oeuvre du surmoulage et les matériaux qui peuvent être utilisés à cet effet, notamment une matière plastique thermodurcissable ou thermoplastique telle qu'un polyamide armé de fibres de verre (ce choix n'étant bien entendu aucunement limitatif) moulée par injection sous pression.

L'élément surmoulé comporte une partie longitudinale 20 venant entourer l'élément métallique 10. Il comporte, de manière en elle-même connue, des parties de structure telles que 22 pour la fixation à la poutre du bouclier en plus de la fixation au point 16 du jambage 15, ou encore telles que 24 aptes à recevoir des blocs optiques, ou encore un logement 26 pour une serrure de capot solidaire de l'élément métallique 10.

La structure plastique comporte en outre un système de nervures telles que 28 permettant d'accroître la rigidité du profilé 12. De même, le jambage 15 peut comporter un système de nervures permettant d'accroître sa rigidité.

On notera que, comme illustré, l'élément métallique 10 n'est que partiellement noyé dans la matière plastique afin de laisser apparentes certaines parties du profilé ou du jambage, notamment celles comportant des trous de liaison à d'autres organes du véhicule.

On obtient ainsi une façade comportant un jambage central 15 intégré, non démontable, permettant de pallier les inconvénients des jambages rapportés des structures de façade proposées jusqu'à présent.

Diverses variantes de cette structure sont bien entendu envisageables sans sortir du cadre de l'invention comme défini par les revendications.
Ainsi, le profilé 12 peut être réalisé en une ou deux parties, en fonction des choix de conception pour le véhicule. Ou encore, la liaison entre le jambage 15 et le profilé 12 peut être réalisée aussi bien avant surmoulage que pendant le surmoulage (par exemple par clinchage à l'intérieur du moule de surmoulage, puis injection de la matière plastique).

En ce qui concerne la fixation de la serrure de capot, celle-ci peut se faire sur l'un des éléments, profilé 12 ou jambage 15, ou bien sur les deux à la fois.

Bien entendu, outre le jambage central 15, d'autres éléments support peuvent être intégrés à la façade suivant le même principe, par exemple des pattes de fixation latérales, des jambages supplémentaires, etc., les parties métalliques étant, ici encore, toutes reliées ensembles puis surmoulées de manière à constituer un ensemble indémontable.

## Revendications

1. Façade avant composite métal/plastique pour véhicule automobile, comprenant un profilé métallique (12) pourvu de moyens (14) de fixation à des éléments de structure du véhicule, ainsi qu'au moins un jambage central (15) comprenant des moyens de fixation à une serrure de capot, le profilé (12) et le jambage étant mécaniquement solidarisés entre eux pour former un ensemble unitaire, cet ensemble étant surmoulé avec un élément (20) en matière plastique de la façade,
façade **caractérisée en ce que** le profilé métallique (12) est en partie supérieure de la façade et s'étend sur toute la largeur de celle-ci et **en ce que** le jambage central (15) comprend des moyens de fixation à une poutre-bouclier ou pare-chocs du véhicule.

2. Façade selon la revendication 1, **caractérisée en ce que** l'élément (20) en matière plastique comporte des nervures verticales (28) de renforcement du profilé.

3. Façade selon l'une des revendications 1 et 2, **caractérisée en ce que** le profilé (12) et le jambage (15) sont solidarisés avant surmoulage de l'élément en matière plastique, notamment par clinchage, soudage ou rivetage.

4. Façade selon l'une des revendications 1 et 2, **caractérisée en ce que** le profilé (12) et le jambage (15) sont solidarisés pendant le surmoulage de l'élément en matière plastique, notamment par clinchage.

## Patentansprüche

1. Vorderseite aus einem Metall/Kunststoff-Verbund für ein Kraftfahrzeug mit einem Metallprofil (12), das mit Mitteln (14) zur Befestigung an Strukturelementen des Fahrzeugs versehen ist, sowie zumindest einem Stützglied (15) mit Mitteln zur Befestigung an einem Haubenschloss, wobei das Profil (12) und das Stützglied mechanisch miteinander fest verbunden sind, um eine einstückige Einheit zu bilden, wobei auf diese Einheit ein Kunststoffelement (20) der Vorderseite aufgeformt ist,
**dadurch gekennzeichnet, dass** das Metallprofil (12) sich im oberen Teil der Vorderseite befindet und sich über deren ganze Breite erstreckt und dass das mittige Stützglied (15) Mittel zur Befestigung an einem Träger eines verformbaren Stoßfängers oder eines Stoßdämpfers des Fahrzeugs umfasst.

2. Vorderseite nach Anspruch 1, **dadurch gekennzeichnet, dass** das Kunststoffelement (20) vertikale Rippen (28) zur Verstärkung des Profils umfasst.

3. Vorderseite nach einem der Ansprüche 1 und 2, **dadurch gekennzeichnet, dass** das Profil (12) und das Stützglied (15) *vor* der Aufformung des Kunststoffelements insbesondere durch Durchsetzfügen, Verschweißen oder Vernietung fest verbunden werden.

4. Vorderseite nach einem der Ansprüche 1 und 2, **dadurch gekennzeichnet, dass** das Profil (12) und das Stützglied (15) während der Aufformung des Kunststoffelements insbesondere durch Durchsetzfügen fest verbunden werden.

## Claims

1. Metal/plastic composite front panel for a motor vehicle, comprising a metal section piece (12) provided with means (14) of attachment to structural elements of the vehicle, and a central strut (15) comprising means of attachment to a bonnet catch, the section piece (12) and the strut being mechanically joined together to form a unitary assembly, this assembly being overmoulded with a plastic element (20) of the panel, which panel is **characterized in that** the metal section piece (12) is in the upper part of the panel and stretches across the entire width thereof and **in that** the central strut (15) comprises means of attachment to a cowl-spar or bumper of the vehicle.

2. Panel according to Claim 1, **characterized in that** the plastic element (20) has vertical ribs (28) to strengthen the section piece.

3. Panel according to one of Claims 1 and 2, **characterized in that** the section piece (12) and the strut (15) are joined together before the plastic element is overmoulded, particularly by clinching, welding or riveting.

4. Panel according to one of Claims 1 and 2, **characterized in that** the section piece (12) and the strut (15) are joined together while the plastic element is being overmoulded, particularly by clinching.
